# EUROPEAN PATENT APPLICATION

(11) **EP 2 614 971 A1**
(43) Date of publication of application: **17.07.2013**
(21) Application number: 11823423.6
(22) Date of filing: 25.08.2011
(51) Int. Cl.: B60H 1/22

(54) **HEAT MEDIUM HEATING DEVICE AND VEHICLE AIR CONDITIONING APPARATUS PROVIDED WITH SAME**

(30) Priority: 06.09.2010 JP 2010199019
(71) Applicant: Mitsubishi Heavy Industries, Ltd., Tokyo 108-8215 (JP)
(72) Inventor: KOMINAMI, Satoshi, Tokyo 108-8215 (JP)
(74) Representative: Henkel, Breuer & Partner
(86) International application number: PCT/JP2011/069175
(87) International publication number: WO 2012/032944

(57) **Abstract**

The purpose of the present invention is to provide a heat medium heating device capable of increasing the adhesion property of a cooling plate without increasing the size thereof, and a vehicle air conditioning apparatus provided with the same. A heat medium heating device is provided with: electrode plates which are sequentially stacked on at least both surfaces of a PTC element with the PTC clement put therebetween; a plurality of flat heat exchanger tubes (17) which each comprise an inlet header part (22) through which a heat medium is supplied, an outlet header part (23) through which the heat medium is led out, and adhesion members provided in the inlet header part (22) and the outlet header part (23), are stacked parallel to each other with the electrode plates interposed therebetween, and exchange heat with the electrode plates; a substrate which is provided on one surface side of the stacked plurality of heat exchanger tubes (17) and connected to the electrode plates; a heat generating element which is connected to the substrate; a plate-shaped pressing member (16) which is connected to the other surface side of the substrate and presses the stacked plurality of heat exchanger tubes (17); and a casing (11) which houses the electrode plates, the heat exchanger tubes (17), the substrate, the pressing member (17), and the heat generating element.

## Description

### {Technical Field}

The present invention relates to a heat medium heating device and a vehicle air conditioning apparatus provided with the heat medium heating device.

### {Background Art}

Conventionally, a device including a PTC heater whose heat generating element is a positive temperature coefficient thermistor (PTC element) is known as one of heat medium heating devices that heat a heat medium to be heated.
The PTC heater has positive temperature coefficient thermistor characteristics. A resistance value of the PTC heater becomes larger as the temperature becomes higher. This controls consumed current, and makes an increase in temperature slower. After that, the consumed current and the temperature of a heat generating part each reach a saturated region to become stable. That is, the PTC heater has a self-temperature control characteristic.

As described above, the PTC heater has such a characteristic that the consumed current becomes smaller as the temperature of the heater becomes higher and that the consumed current then becomes stable at a small value when the saturated region of a given temperature is reached. The use of such a characteristic brings about advantages that consumed power can be saved and that the temperature of the heat generating part can be prevented from abnormally increasing.
Because the PTC heater has such a characteristic, the PTC heater is used in many technical fields. In the field of air conditioning, for example, it is proposed that the PTC heater is applied to a heating device for heating a heat medium (here, cooling water for an engine) supplied to a heat radiator for air warming, in a vehicle air conditioning apparatus (for example, PTL 1 and PTL 3).

### {Citation List}

### {Patent Literature}

{PTL 1}
   Japanese Unexamined Patent Application, Publication No. 2008-7106
{PTL 2}
   Japanese Unexamined Patent Application, Publication No. 2010-2094
{PTL 3}
   the Publication of Japanese Patent No. 4100328

### {Summary of Invention}

### {Technical Problem}

According to an invention described in PTL 2, at the time of manufacturing a cooler, a pressure is applied to between a plurality of cooling plates vertically disposed in a casing, and a diaphragm part provided to each cooling plate is deformed, whereby a semiconductor element and each cooling plate are brought into close contact with each other. Accordingly, in the case where the cooling plates are stacked in the horizontal direction, the height of the cooler cannot be reduced.

The present invention, which has been made in view of the above-mentioned circumstances, has an object to provide a heat medium heating device capable of achieving closer contact between cooling plates without an increase in size thereof, and a vehicle air conditioning apparatus provided with the heat medium heating device.

### {Solution to Problem}

In order to achieve the above-mentioned object, the present invention provides the following solutions.
A heat medium heating device according to a first aspect of the present invention includes: electrode plates that are respectively stacked on at least both sides of a PTC element so as to sandwich the PTC element; a plurality of flat heat exchanger tubes each including: an inlet header part that supplies a heat medium; an outlet header part that discharges the heat medium; and a hermetic member provided in each of the inlet header part and the outlet header part, the heat exchanger tubes being stacked so as to be parallel to each other with the electrode plates being sandwiched therebetween and exchanging heat with the electrode plates; a substrate that is provided on one side of the plurality of the stacked heat exchanger tubes and is connected to the electrode plates; a heat generating element connected to the substrate; a plate-shaped pressing member that is connected to another side of the substrate and presses the plurality of the stacked heat exchanger tubes; and a casing that houses the electrode plates, the heat exchanger tubes, the substrate, the pressing member, and the heat generating element.

The plurality of the heat exchanger tubes, which exchange heat with the electrode plates that are respectively stacked on at least both sides of the PTC element so as to sandwich the PTC element, are stacked so as to be parallel to each other, and the substrate and the pressing member are provided on one side of the plurality of the stacked heat exchanger tubes. Hence, the hermetic members provided between the inlet header parts and between the outlet header parts can be respectively brought into close contact with the inlet header parts and the outlet header parts by the pressing member. This can achieve closer contact between the stacked heat exchanger tubes, and can reduce a thermal contact resistance between the electrode plates and the heat exchanger tubes. Accordingly, the heat medium heating device can have improved efficiency of heat transfer from the heat exchanger tubes to the electrode plates.

In the heat medium heating device according to the first aspect of the present invention, the heat generating element is provided between the substrate and the pressing member, and the pressing member is made of metal.

The heat generating element is provided between the pressing member made of metal and the substrate. Hence, the stacked heat exchanger tubes can be pressed by the pressing member, and the heat generating element can be cooled by cooling heat from the heat exchanger tubes with the intermediation of the pressing member. Accordingly, the heat medium heating device can have further improved efficiency of heat transfer.
Further, the pressing member serves as both the pressing member that presses the stacked heat exchanger tubes and a cooling member that cools the heat generating element. Hence, the number of components constituting the heat medium heating device can be reduced. Accordingly, the size of the entire heat medium heating device can be reduced.

In the heat medium heating device according to the first aspect of the present invention, the casing includes a heat medium guiding path that is integrally formed in the casing and introduces/discharges the heat medium to/from the plurality of the stacked heat exchanger tubes.

The heat medium guiding path that introduces/discharges the heat medium is integrally formed in the casing. Hence, when the heat medium is supplied to the heat medium heating device, a stress applied to the stacked heat exchanger tubes can be distributed. Accordingly, a load put on the stacked heat exchanger tubes can be reduced.

In the heat medium heating device according to the first aspect of the present invention, the electrode plates include a plurality of terminals protruding at one end parts in a longitudinal direction thereof, the substrate includes a plurality of terminal mounts at one end parts in a longitudinal direction thereof, the plurality of the terminal mounts facing the plurality of the terminals, and the plurality of the terminals are jointed to the plurality of the terminal mounts.

The plurality of the terminals protruding at the one end parts in the longitudinal direction of the electrode plates are joined to the plurality of the terminal mounts at the one end parts in the longitudinal direction of the substrate, the plurality of the terminal mounts facing the plurality of the terminals provided on the electrode plates. This can electrically join the electrode plates directly to the substrate. Hence, the need for wiring (harness) for the electrical connection between the electrode plates and the substrate is eliminated. Accordingly, the wiring route is not complicated, the assembling can be facilitated, and the number of components can be reduced.

In the heat medium heating device according to the first aspect of the present invention, the heat generating element is provided near the inlet header part.

The heat generating element connected to the substrate is provided near the inlet header part that supplies the heat medium. Hence, the heat generating element can be efficiently cooled by the heat medium having a relatively low temperature before heating by the PTC element. Accordingly, cooling performance of the heat generating element can be further enhanced.

In the heat medium heating device according to the first aspect of the present invention, the hermetic member provided in each of the inlet header part and the outlet header part facing the casing is an O-ring.

Thermal expansion of the heat exchanger tubes made of aluminum is concerned during winter season, the thermal expansion being caused by a temperature difference from ambient temperature (external air temperature) during heating by the PTC element. In the case where a liquid gasket is used as the hermetic member provided between the casing and the heat exchanger tube, the casing having a temperature equivalent to the ambient temperature (external air temperature) and being made of a material different from that of the heat exchanger tube, the thermal expansion of the heat exchanger tube may cause a shear failure in the liquid gasket.

In view of the above, the O-ring is used between the heat exchanger tube and the casing. Hence, a shear failure caused by the thermal expansion can be prevented. Accordingly, a decrease in sealing properties between the heat exchanger tube and the casing can be prevented.

A vehicle air conditioning apparatus according to a second aspect of the present invention includes any of the above-mentioned heat medium heating devices.

With the use of the heat medium heating device capable of improving its efficiency of heat transfer without an increase in size, performance of the vehicle air conditioning apparatus can be improved, and the installation space thereof can be reduced.

### {Advantageous Effects of Invention}

According to the plurality of the heat medium heating devices of the present invention, the plurality of the heat exchanger tubes, which exchange heat with the electrode plates that are respectively stacked on at least both sides of the PTC element so as to sandwich the PTC element, are stacked so as to be parallel to each other, and the substrate and the pressing member are provided on one side of the plurality of the stacked heat exchanger tubes. Hence, the hermetic members provided between the inlet header parts and between the outlet header parts can be respectively brought into close contact with the inlet header parts and the outlet header parts by the pressing member. This can achieve closer contact between the stacked heat exchanger tubes, and can reduce a thermal contact resistance between the electrode plates and the heat exchanger tubes. Accordingly, the heat medium heating device can have improved efficiency of heat transfer from the heat exchanger tubes to the electrode plates.

### {Brief Description of Drawings}

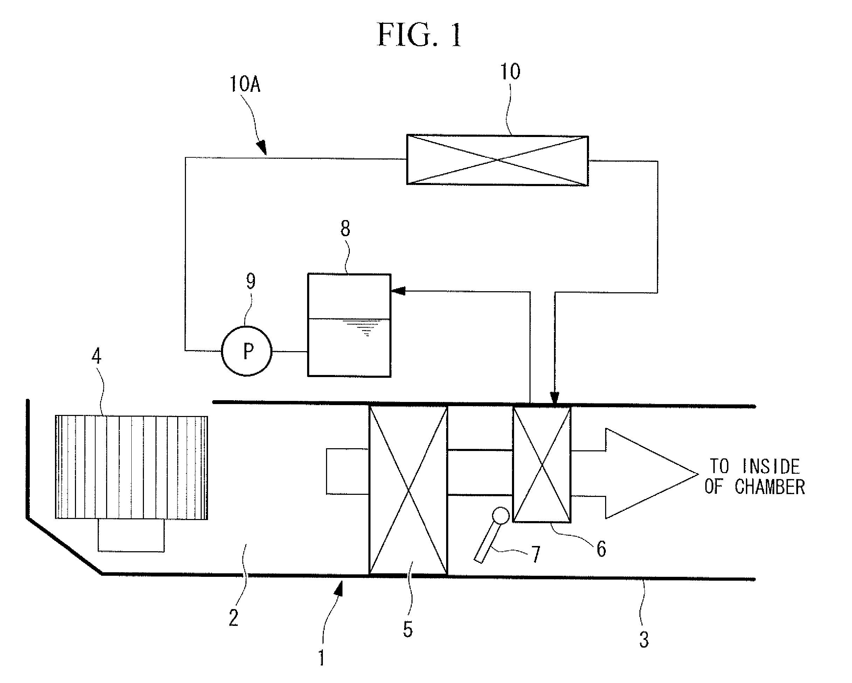

{Fig. 1}
   Fig. 1 is a schematic configuration view of a vehicle air conditioning apparatus including a heat medium heating device according to an embodiment of the present invention.
{Fig. 2}
   Fig. 2 is an exploded perspective view for describing procedures for assembling the heat medium heating device illustrated in Fig. 1.
{Fig. 3A}
   Fig. 3A is a top view of the heat medium heating device illustrated in Fig. 1.
{Fig. 3B}
   Fig. 3B is a side view of the heat medium heating device illustrated in Fig. 1.

### {Description of Embodiments}

A heat medium heating device according to an embodiment of the present invention is described with reference to Fig. 1 to Fig. 3.
Fig. 1 is a schematic configuration view of a vehicle air conditioning apparatus including the heat medium heating device according to the present embodiment.
The vehicle air conditioning apparatus 1 includes a casing 3 for forming an airflow path 2 that takes in external air or air in a chamber, regulates the temperature thereof, and guides the air into the chamber.

A blower 4, a cooler 5, a heat radiator 6, and an air mix damper 7 are installed in the casing 3 in the stated order from the upstream side to the downstream side of the airflow path 2. The blower 4 suctions the external air or the air in the chamber, increases the pressure thereof, and feeds the air under pressure to the downstream side. The cooler 5 cools the air that is fed under pressure by the blower 4. The heat radiator 6 heats the air that is cooled through the cooler 5. The air mix damper 7 adjusts the ratio of the amount of air that passes through the heat radiator 6 to the amount of air that bypasses the heat radiator 6, to thereby adjust the temperature of mixture air downstream of the air mix damper 7.

The downstream side of the casing 3 is connected to a plurality of blow-out ports that blow out the temperature-regulated air into the chamber, through a blow-out mode switching damper and a duct, which are not illustrated.
The cooler 5 constitutes a refrigerant circuit together with a compressor, a condenser, and an expansion valve, which are not illustrated, and a refrigerant adiabatically expanded by the expansion valve is evaporated, whereby air passing through the cooler 5 is cooled.
The heat radiator 6 constitutes a heat medium circulation circuit 10A together with a tank 8, a pump 9, and a heat medium heating device 10, and a heat medium (for example, water) heated by the heat medium heating device 10 is circulated through the pump 9, whereby the temperature of air passing through the heat radiator 6 is increased.

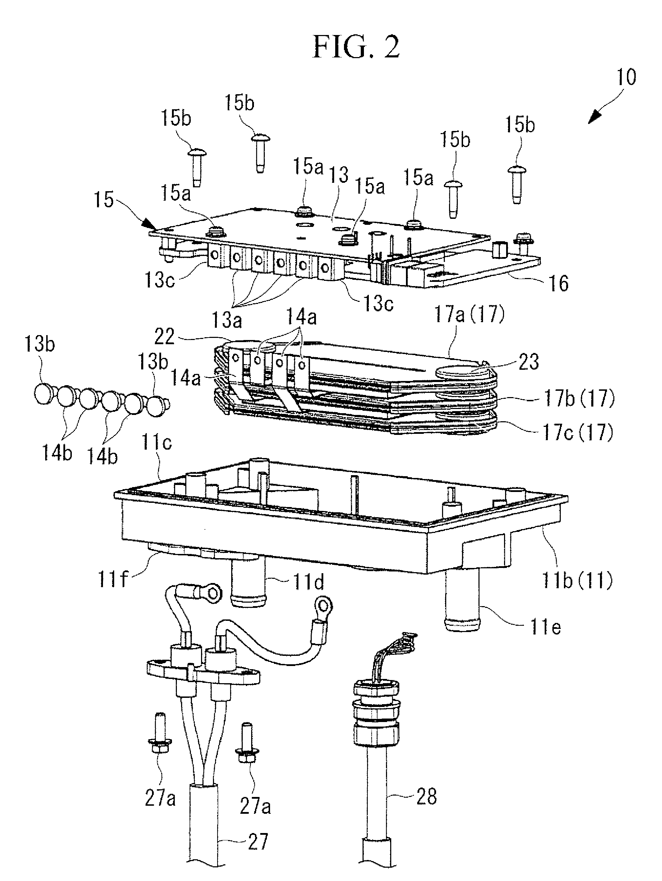

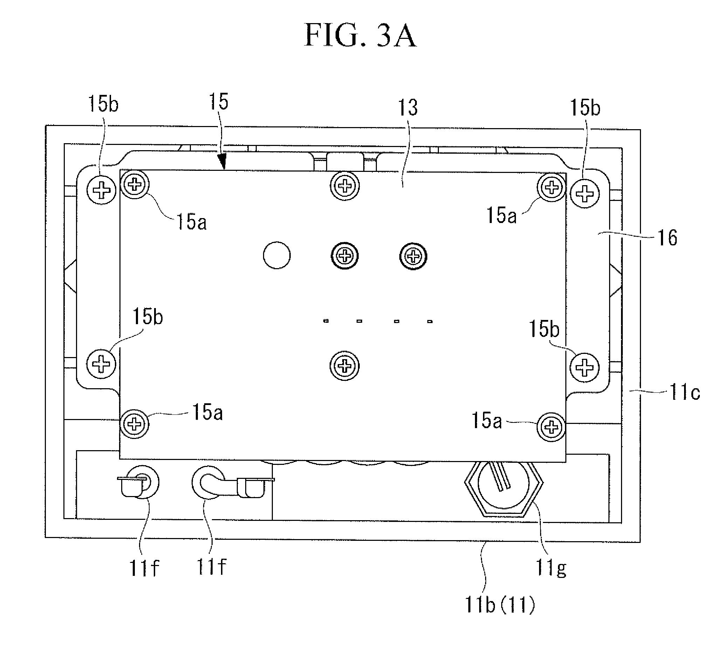

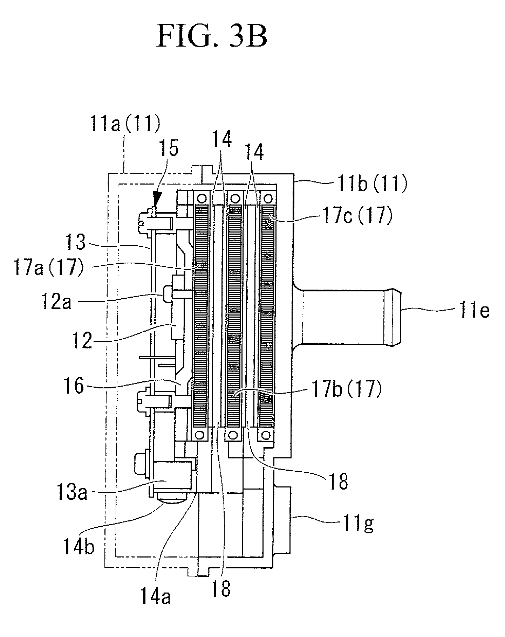

Fig. 2 is an exploded perspective view for describing procedures for assembling the heat medium heating device illustrated in Fig. 1. Fig. 3A is a top view of the assembled heat medium heating device, and Fig. 3B is a side view of the assembled heat medium heating device.

As illustrated in Fig. 2, the heat medium heating device 10 includes: a substrate 13; electrode plates 14 (see Fig. 3B); an IGBT 12 (see Fig. 3B); a heat exchanger holding plate (pressing member) 16; a plurality of (for example, three) heat exchanger tubes (cooling tubes) 17; positive temperature coefficient (PTC) elements 18 (see Fig. 3B); and a casing 11. The electrode plates 14, the stacked heat exchanger tubes 17, the substrate 13, the IGBT 12 (heat generating element), and the heat exchanger holding plate 16 are housed in the casing 11. The electrode plates 14, the PTC elements 18, and insulators (not illustrated) to be described later constitute a PTC heater.

The casing 11 is divided into two, that is, an upper half and a lower half, and includes an upper case 11a (see Fig. 3B) located in the upper half and a lower case 11b located in the lower half. Further, when the upper case 11a is placed in an opening part 11c of the lower case 11b from above the lower case 11b, a space for housing the substrate 13, the IGBT 12, the electrode plates 14, the heat exchanger holding plate 16, the stacked heat exchanger tubes 17, and the PTC elements 18 is formed inside of the upper case 11a and the lower case 11b.

A heat medium inlet path (heat medium guiding path) 11d and a heat medium outlet path (heat medium guiding path) 11e are integrally formed on the lower surface of the lower case 11b. The heat medium inlet path 11d introduces the heat medium to the three stacked heat exchanger tubes 17, and the heat medium outlet path 11e discharges the heat medium. The lower case 11b is molded using a resin material (for example, PBT) whose linear expansion is close to that of aluminum of which the heat exchanger tubes 17 housed in the internal space of the lower case 11b are formed.
It is desirable that the upper case 11a be also molded using such a resin material similarly to the lower case 11b. A reduction in weight can be achieved by molding the upper case 11a using the resin material.

Power supply harness holes 11f and an LV harness hole 11g (see Fig. 3A) are opened on the lower surface of the lower case 11b. Leading end parts of a power supply harness 27 and an LV harness 28 are respectively inserted through the power supply harness holes 11f and the LV harness hole 11g.
The power supply harness 27 supplies power to the substrate 13. The power supply harness 27 has the two divided leading end parts, and the two leading end parts can be respectively screwed to two power supply harness terminal mounts 13c provided on the substrate 13, using electrode harness connection screws 13b.

The LV harness 28 transmits a signal for control to the IGBT 12 provided on the heat exchanger holding plate 16. The leading end part of the LV harness 28 can be connector-joined to the substrate 13.

The heat exchanger tubes 17 constituting the PTC heater are made of aluminum. For the heat exchanger tubes 17, as illustrated in Fig. 3B, for example, the three heat exchanger tubes 17 are stacked so as to be parallel to each other. The three heat exchanger tubes 17 are stacked in order of lower-stage, middle-stage, and upper-stage heat exchanger tubes 17c, 17b, and 17a. Corrugated inner fins (not illustrated) are formed in flow paths of the heat exchanger tubes 17a, 17b, and 17c. As a result, a plurality of flow paths communicated in the axial direction thereof are formed in the heat exchanger tubes 17a, 17b, and 17c.

The inner fins formed in the heat exchanger tubes 17a, 17b, and 17c increase the stiffness of the heat exchanger tubes 17a, 17b, and 17c. Accordingly, even if the heat exchanger tubes 17a, 17b, and 17c are urged by a substrate sub-assembly 15 to be described later toward the inner bottom surface of the lower case 11b, the heat exchanger tubes 17a, 17b, and 17c are deformed less easily.

As illustrated in Fig. 2, the heat exchanger tubes 17a, 17b, and 17c each include: an inlet header part 22 that supplies the heat medium; and an outlet header part 23 that discharges the heat medium, and also include liquid gaskets (hermetic members) provided between the inlet header parts 22 and between the outlet header parts 23. The heat exchanger tubes 17a, 17b, and 17c are stacked so as to be parallel to each other with the electrode plates 14 being sandwiched therebetween.

The heat exchanger tubes 17a, 17b, and 17c each have, in plan view, a flat shape that is long in the axial direction thereof (the left-right direction in Fig. 2). The flat heat exchanger tubes 17a, 17b, and 17c are wider in the flatness direction thereof, that is, the thickness direction thereof (the top-bottom direction in Fig. 2) orthogonal to the axial direction.

The inlet header part 22 and the outlet header part 23 are respectively provided at end parts in the axis direction of each of the heat exchanger tubes 17a, 17b, and 17c. The inlet header part 22 and the outlet header part 23 each include a communication hole (not illustrated) at the center thereof.

The heat exchanger tubes 17c, 17b, and 17a are stacked in the stated order, and are pressed by the substrate sub-assembly 15 to be described later toward the inner bottom surface of the lower case 11b. Consequently, the liquid gasket brings the lower surfaces of the inlet header part 22 and the outlet header part 23 of the middle-stage heat exchanger tube 17b into close contact with the upper surfaces of the inlet header part 22 and the outlet header part 23 of the lower-stage heat exchanger tube 17c located therebelow, and the liquid gasket also brings the upper surfaces of the inlet header part 22 and the outlet header part 23 of the middle-stage heat exchanger tube 17b into close contact with the lower surfaces of the inlet header part 22 and the outlet header part 23 of the upper-stage heat exchanger tube 17a. The heat exchanger tubes 17a, 17b, and 17c are stacked in this way, whereby the respective communication holes of the upper-stage heat exchanger tube 17a, the middle-stage heat exchanger tube 17b, and the lower-stage heat exchanger tube 17 are communicated with each other.

The heat medium guided from the heat medium inlet path 11d is guided into the heat exchanger tubes 17a, 17b, and 17c from the respective inlet header parts 22. The temperature of the heat medium that flows into the heat exchanger tubes 17a, 17b, and 17c is increased (the heat medium is heated) while the heat medium passes through the heat exchanger tubes 17a, 17b, and 17c. Then, the heat medium flows into the respective outlet header parts 23 from the heat exchanger tubes 17a, 17b, 17, and is discharged to the outside of the heat medium heating device 10 from the heat medium outlet path 11e. The heat medium discharged from the heat medium heating device 10 is supplied to the heat radiator 6 through the heat medium circulation circuit 10A (see Fig. 1).

As illustrated in Fig. 3B, the electrode plates 14 supply power for actuating the PTC elements 18, and are plate-shaped aluminum members having a rectangular shape in plan view. The electrode plates 14 are sequentially stacked on at least both sides of each PTC element 18 so as to sandwich the PTC element 18. One electrode plate 14 is provided so as to be in contact with the upper surface of each PTC element 18, and one electrode plate 14 is provided so as to be in contact with the lower surface of each PTC element 18. These two electrode plates 14 sandwich the upper surface and the lower surface of the PTC element 18.

Further, the electrode plate 14 located on the upper surface side of the PTC element 18 is arranged such that the upper surface thereof is in contact with the lower surface of the heat exchanger tube 17. The electrode plate 14 located on the lower surface side of the PTC element 18 is arranged such that the lower surface thereof is in contact with the upper surface of the heat exchanger tube 17. In the present embodiment, two electrode plates 14 are provided between the lower-stage heat exchanger tube 17c and the middle-stage heat exchanger tube 17b, and two electrode plates 14 are provided between the middle-stage heat exchanger tube 17b and the upper-stage heat exchanger tube 17a. That is, the number of the electrode plates 14 is four in total.

The four electrode plates 14 each have substantially the same shape as that of the heat exchanger tubes 17a, 17b, and 17c. Each electrode plate 14 is provided with one terminal 14a on a longer side thereof. The terminals 14a respectively provided on the electrode plates 14 do not overlap with each other when the electrode plates 14 are stacked, and the terminals 14a are respectively located along the longer sides of the electrode plates 14. That is, the terminals 14a are respectively provided on the electrode plates 14 such that the positions thereof are shifted little by little along the longer sides of the electrode plates 14, and the terminals 14a are arranged in series in the case where the electrode plates 14 are stacked.

Each terminal 14a is provided so as to protrude upward. Each terminal 14a is connected to a terminal mount 13a provided on the substrate 13, using a terminal connection screw 14b.

In the substrate sub-assembly 15, the substrate 13 and the heat exchanger holding plate 16 are provided so as to be parallel to each other, and the IGBT 12 installed on the upper surface of the heat exchanger holding plate 16 is sandwiched therebetween. The substrate 13 and the heat exchanger holding plate 16 are fixed to each other using, for example, four substrate sub-assembly connection screws 15a. This achieves integration of the substrate sub-assembly 15.

The terminal mounts 13a facing the terminals 14a of the electrode plates 14 are provided on the lower surface of the substrate 13 constituting the substrate sub-assembly 15, along one side of the substrate 13 corresponding to the terminals 14a respectively provided on the electrode plates 14, and the number of the terminal mounts 13a is, for example, four. Further, the two power supply harness terminal mounts 13c to be connected to the leading end parts of the power supply harness 27 are provided so as to be in series with the four terminal mounts 13a.

The terminal mounts 13a and the power supply harness terminal mounts 13c are each provided so as to protrude downward from the lower surface of the substrate 13. Further, the terminal mounts 13a and the power supply harness terminal mounts 13c are provided so as to be in series along longer sides of the stacked heat exchanger tubes 17a, 17b, and 17c.

The terminal mounts 13a and the power supply harness terminal mounts 13c are provided on the substrate 13 so as to be slightly above the opening part 11c of the lower case 11f. With this configuration, the terminals 14a of the electrode plates 14 and the leading end parts of the power supply harness 27 that are respectively connected to the terminal mounts 13a and the power supply harness terminal mounts 13c are fixed more easily.

As illustrated in Fig. 3B, the insulated gate bipolar transistor (IGBT) 12 is a transistor having a substantially rectangular shape. The IGBT 12 is a heat generating element that generates heat during its actuation. The IGBT 12 is screwed using an IGBT 12 connection screw 12a to the upper surface of the heat exchanger holding plate 16, in the vicinity of the inlet header part 22 of the upper-stage heat exchanger tube 17a.

The heat exchanger holding plate 16 constituting the substrate sub-assembly 15 is a plate-shaped metal member having a flat shape in plan view. The plate-shaped heat exchanger holding plate 16 is larger in the axial direction thereof than the substrate 13, and has a size large enough to cover the heat exchanger tubes 17a, 17b, and 17c. The heat exchanger holding plate 16 that is larger in the axial direction thereof than the substrate 13 is provided with through holes (not illustrated). Substrate sub-assembly fixing screws 15b (see Fig. 3A) for fixing the heat exchanger holding plate 16 to the lower case 11b can pass through the through holes, and the number of the through holes is, for example, four.

The substrate sub-assembly 15 is placed above the stacked upper-stage heat exchanger tube 17a. That is, the substrate sub-assembly 15 is arranged such that the lower surface of the heat exchanger holding plate 16 is in contact with the upper surface of the upper-stage heat exchanger tube 17a.

The heat exchanger holding plate 16 is screwed to the lower case 11b using the four substrate sub-assembly fixing screws 15b, whereby the substrate sub-assembly 15 sandwiches the heat exchanger tubes 17a, 17b, and 17c stacked between the lower surface of the heat exchanger holding plate 16 and the inner bottom surface of the lower case 11b. In this way, the substrate sub-assembly 15 is screwed to the lower case 11b, whereby the heat exchanger tubes 17a, 17b, and 17c can be urged (pressed) toward the inner bottom surface of the lower case 11b.

Further, the heat exchanger holding plate 16 constituting the substrate sub-assembly 15 is made of metal, and hence cooling heat of the heat medium flowing through the heat exchanger tubes 17a, 17b, and 17c can be used to cool the IGBT 12 with the intermediation of the heat exchanger holding plate 16.

Next, procedures for assembling the heat medium heating device 10 according to the present embodiment are described with reference to Fig. 2, Fig. 3A, and Fig. 3B.
The liquid gasket (not illustrated) is applied to the opening part 11c of the lower case 11b. The lower-stage heat exchanger tube 17c is installed in the internal space of the lower case 11b so as to be substantially parallel to the inner bottom surface of the lower case 11b.
The PTC element 18 is sandwiched by insulating sheets (not illustrated) from both sides thereof, and is placed from above the lower-stage heat exchanger tube 17c.

The liquid gasket is applied to the upper surfaces of the inlet header part 22 and the outlet header part 23 of the lower-stage heat exchanger tube 17c, and the middle-stage heat exchanger tube 17b is placed from above the lower-stage heat exchanger tube 17c. The PTC element 18 is sandwiched by insulating sheets from both sides thereof, and is placed from above the middle-stage heat exchanger tube 17b.

The liquid gasket is applied to the upper surfaces of the inlet header part 22 and the outlet header part 23 of the middle-stage heat exchanger tube 17b, and the upper-stage heat exchanger tube 17a is placed from above the middle-stage heat exchanger tube 17b.

The substrate sub-assembly 15 is placed from above the placed upper-stage heat exchanger tube 17a with the heat exchanger holding plate 16 facing downward. The heat exchanger holding plate 16 of the substrate sub-assembly 15 placed on the upper-stage heat exchanger tube 17a is screwed to the lower case 11b using the substrate sub-assembly fixing screws 15b.

Consequently, the respective inlet header parts 22 and the respective outlet header parts 23 of the heat exchanger tubes 17a, 17b, and 17c are urged toward the inner bottom surface of the lower case 11b. As a result, the inlet headers 22 are brought into close contact with each other, and the outlet header parts 23 are brought into close contact with each other.

Because the inlet headers 22 are brought into close contact with each other and the outlet header parts 23 are brought into close contact with each other, the respective PTC elements 18 and the respective electrode plates 14 sandwiched between the lower-stage heat exchanger tube 17c and the middle-stage heat exchanger tube 17b and between the middle-stage heat exchanger tube 17b and the upper-stage heat exchanger tube 17a are brought into close contact with the heat exchanger tubes 17a, 17b, and 17c.

Next, the terminal mounts 13a provided on the substrate 13 constituting the substrate sub-assembly 15 are respectively finally joined to the terminals 14a of the electrode plates 14 using the terminal connection screws 14b.
The electrode harness 27 is inserted into the power supply harness holes 11f, and the leading end parts of the electrode harness 27 are respectively screwed to the power supply harness terminal mounts 13c provided on the substrate 13 constituting the substrate sub-assembly 15, using the electrode harness connection screws 13b.

Moreover, the leading end part of the LV harness 28 is inserted into the lower case 11b from the LV harness hole 11g opened on a side wall of the lower case 11b, and is connector-jointed to the substrate 13.
The electrode harness 27 is fixed using power supply harness fixing screws 27a from the outer bottom surface of the lower case 11b, and the LV harness 28 is fixed to the LV harness hole 11g.

The liquid gasket is applied to the opening part 11c of the lower case 11b. The upper case 11a is placed from above the lower case 11b. A clip part (not illustrated) provided in the upper case 11a is engaged with a claw part (not illustrated) provided in the lower case 11b, whereby the upper case 11a is coupled to the lower case 11b. In this way, the assembling of the heat medium heating device 10 is completed (finished).

As has been described above, the heat medium heating device 10 and the vehicle air conditioning apparatus 1 according to the present embodiment produce the following effects.
The three (plurality of) heat exchanger tubes 17, which exchange heat with the electrode plates 14 that are sequentially stacked on at least both sides of each PTC element 18 so as to sandwich the PTC element 18, are stacked so as to be parallel to each other. The substrate sub-assembly 15 including the substrate 13 and the heat exchanger holding plate (pressing member) 16 in combination is provided on the upper surface of the stacked upper-stage heat exchanger tube 17a (on one side of the heat exchanger tubes 17). Hence, the liquid gaskets (hermetic members) provided between the inlet header parts 22 and between the outlet header parts 23 can be respectively brought into close contact with the inlet header parts 22 and the outlet header parts 23 by the heat exchanger holding plate 16 constituting the substrate sub-assembly 15. This can achieve closer contact between the stacked heat exchanger tubes 17, and can reduce a thermal contact resistance between the electrode plates 14 and the heat exchanger tubes 17. Accordingly, the heat medium heating device 10 can have improved efficiency of heat transfer from the heat exchanger tubes 17 to the electrode plates 14.

The IGBT (heat generating element) 12 is provided between the heat exchanger holding plate 16 made of metal and the substrate 13. Hence, the stacked heat exchanger tubes 17 can be pressed by the heat exchanger holding plate 16 and the substrate 13, and the IGBT 12 can be cooled by cooling heat from the heat exchanger tubes 17 with the intermediation of the heat exchanger holding plate 16. Accordingly, the heat medium heating device 10 can have further improved efficiency of heat transfer.
Further, the heat exchanger holding plate 16 serves to both press the stacked heat exchanger tubes 17 and cool the IGBT 12. Hence, the number of components constituting the heat medium heating device 10 can be reduced. Accordingly, the size of the entire heat medium heating device 10 can be reduced.

The heat medium inlet path (heat medium guiding path) 11d that introduces the heat medium and the heat medium outlet path (heat medium guiding path) 11e that discharges the heat medium are integrally formed in the lower case 11b. Hence, when the heat medium is supplied to the heat medium heating device 10, a stress applied to the stacked heat exchanger tubes 17 can be distributed. Accordingly, a load put on the heat exchanger tubes 17 can be reduced.

Further, for electrical connection between the substrate sub-assembly 15 and the electrode plates 14, it is sufficient to simply fix the terminal mounts 13a provided on the substrate 13 constituting the substrate sub-assembly 15 to the terminals 14a respectively provided on the electrode plates 14, using the terminal connection screws 14b, and hence the need for wiring (harness) for the electrical connection can be eliminated. Accordingly, the wiring route is not complicated, the assembling can be facilitated, and the number of components can be reduced.

Moreover, the IGBT (heat generating element) 12 connected to the substrate 13 is provided near the respective inlet header parts 22 of the heat exchanger tubes 17. Hence, the IGBT 12 can be cooled by the heat medium having a relatively low temperature before heating by the PTC elements 18. Accordingly, this is preferable for further enhancement in cooling performance of the IGBT 12.

With the use of the heat medium heating device 10 having improved efficiency of heat transfer and a reduced size, performance of the vehicle air conditioning apparatus 1 can be improved, and the installation space thereof can be reduced.

The liquid gasket used here is a hardening liquid sealing agent that has excellent heat resistance and thus is suitable for sealing between the inlet header parts 22 and between the outlet header parts 23 of the heat exchanger tubes 17 to be subjected to a high temperature (for example, silicone-based liquid gasket (product number: 1207d) containing silicone as its chief component, which is produced by ThreeBond Co., Ltd.).

Further, in the present embodiment, description is given of the case where the liquid gasket is used as the hermetic member, but the present invention is not limited to this case. Alternatively, an O-ring and the like may be used as the hermetic member, or the close contact may be achieved by fixing with brazing.

In the case of using the O-ring and the like, if the heat exchanger tubes 17a, 17b, and 17c are made of, for example, aluminum, thermal expansion thereof is concerned during winter season, the thermal expansion being caused by a temperature difference from ambient temperature (external air temperature) during heating by the PTC elements 18. Hence, in the case of using the casing 11 made of a different material (for example, resin), if the liquid gasket is used to respectively fix the heat medium inlet path 11d and the heat medium outlet path 11e of the lower case 11b to the inlet header part 22 and the outlet header part 23 of the heat exchanger tube 17c, the heat exchanger tube 17c is thermally expanded as described above. At this time, the temperature of the casing 11 is equivalent to the ambient temperature (external air temperature), and hence the thermal expansion may cause a shear failure in the liquid gasket.

In consideration of the above, for example, the liquid gaskets are used as the hermetic members between the inlet header parts 22 and between the outlet header parts 23 of the heat exchanger tubes 17a, 17b, and 17c made of the same material, and the O-rings are used as the hermetic members between: the inlet header part 22 and the outlet header part 23 of the heat exchanger tube 17c; and the heat medium inlet path 11d and the heat medium outlet path 11e of the lower case 11b, the heat exchanger tube 17c and the lower case 11b being made of different materials. Consequently, a shear failure can be prevented.
As described above, preferable hermetic members such as the liquid gasket and the O-ring can be optimally selected as appropriate in accordance with the material of the casing 11 and the material of the heat exchanger tubes 17.

**{Reference Signs List}**

| | |
|---|---|
| 1 | vehicle air conditioning apparatus |
| 10 | heat medium heating device |
| 11 | casing |
| 12 | IGBT (heat generating element) |
| 13 | substrate |
| 16 | heat exchanger holding plate (pressing member) |
| 17 | heat exchanger tube (cooling tube) |
| 22 | inlet header part |
| 23 | outlet header part |

## Claims

1. A heat medium heating device comprising:
electrode plates that are respectively stacked on at least both sides of a PTC element so as to sandwich the PTC element;
a plurality of flat heat exchanger tubes each including:
an inlet header part that supplies a heat medium;
an outlet header part that discharges the heat medium; and
a hermetic member provided in each of the inlet header part and the outlet header part,
the heat exchanger tubes being stacked so as to be parallel to each other with the electrode plates being sandwiched therebetween and exchanging heat with the electrode plates;
a substrate that is provided on one side of the plurality of the stacked heat exchanger tubes and is connected to the electrode plates;
a heat generating element connected to the substrate;
a plate-shaped pressing member that is connected to another side of the substrate and presses the plurality of the stacked heat exchanger tubes; and
a casing that houses the electrode plates, the heat exchanger tubes, the substrate, the pressing member, and the heat generating element.

2. The heat medium heating device according to claim 1, wherein
the heat generating element is provided between the substrate and the pressing member, and
the pressing member is made of metal.

3. The heat medium heating device according to claim 1 or claim 2, wherein
the casing includes a heat medium guiding path that is integrally formed in the casing and introduces/discharges the heat medium to/from the plurality of the stacked heat exchanger tubes.

4. The heat medium heating device according to any of claim 1 to claim 3, wherein
the electrode plates include a plurality of terminals protruding at one end parts in a longitudinal direction thereof,
the substrate includes a plurality of terminal mounts at one end parts in a longitudinal direction thereof, the plurality of the terminal mounts facing the plurality of the terminals, and
the plurality of the terminals are jointed to the plurality of the terminal mounts.

5. The heat medium heating device according to any of claim 1 to claim 4, wherein
the heat generating element is provided near the inlet header part.

6. The heat medium heating device according to any of claim 1 to claim 5, wherein
the hermetic member provided in each of the inlet header part and the outlet header part facing the casing is an O-ring.

7. A vehicle air conditioning apparatus comprising the heat medium heating device according to any of claim 1 to claim 6.
